(19) Europäisches Patentamt
European Patent Office
Office européen des brevets

(11) **EP 1 970 490 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(51) Int Cl.:
*D21G 1/02* *(2006.01)*          *F28F 5/02* *(2006.01)*
*D21F 3/08* *(2006.01)*          *F16C 13/00* *(2006.01)*

(21) Anmeldenummer: **08151196.6**

(22) Anmeldetag: **08.02.2008**

(54) **Temperierbare Walze**

Temperable roller

Presse pouvant être tempérée

(84) Benannte Vertragsstaaten:
**AT DE FI IT SE**

(30) Priorität: **12.03.2007 DE 102007012169**

(43) Veröffentlichungstag der Anmeldung:
**17.09.2008 Patentblatt 2008/38**

(73) Patentinhaber: **Voith Patent GmbH**
**89522 Heidenheim (DE)**

(72) Erfinder: **Dr. rer. nat. Wiemer, Peter**
**41532, Korschenbroich (DE)**

(56) Entgegenhaltungen:
**US-A- 2 015 747     US-A- 2 890 026**

**Beschreibung**

Die Erfindung betrifft eine temperierbare Walze mit einem Walzenkörper, der eine Strömungskanalanordnung für ein Wärmeträgermedium aufweist, die mit einer Drehdurchführung verbunden ist, die einen inneren Kernkanal und einen äußeren Ringkanal aufweist, wobei der Kernkanal einen ersten Strömungsquerschnitt und der Ringkanal einen zweiten Strömungsquerschnitt aufweist.

Insbesondere betrifft die Erfindung eine temperierbare Kalanderwalze, die verwendet wird, um zusammen mit einer Gegenwalze oder einem anderen Andruckelement eine Papier- oder Kartonwalze mit erhöhtem Druck und erhöhter Temperatur zu beaufschlagen.

Eine temperierbare Walze wird mit einem Wärmeträgermedium gespeist, das in vielen Fällen eine Flüssigkeit ist, beispielsweise Wasser oder Öl. Das in die Walze hinein geförderte Wärmeträgermedium muss auch wieder aus der Walze heraus fließen können. Da sich die Walze dreht, der Zufluss und der Abfluss des Wärmeträgermediums aber über stationäre Kanäle erfolgen muss, wird die Drehdurchführung verwendet. Die Drehdurchführung weist dabei zwei konzentrische Kanäle auf, nämlich einen inneren Kernkanal und einen äußeren Ringkanal, so dass der Zufluss und der Abfluss des Wärmeträgermediums unabhängig von der aktuellen Winkelposition der Walze erfolgen kann.

Da man davon ausgeht, dass immer gleich viel Wärmeträgermedium zufließen und abfließen muss, sind die Strömungsquerschnitte von Ringkanal und Kernkanal gleich.

Bei immer schneller laufenden Walzen muss auch eine immer größere Wärmemenge in die Walze eingetragen werden, um die gewünschte Temperatur zu erzielen. Die maximale Temperatur des Wärmeträgermediums ist begrenzt. Bei Wasser liegt sie beispielsweise in der Größenordnung von 100° C. Die Strömungsgeschwindigkeit lässt sich aufgrund der dabei entstehenden Druckabfälle auch nicht beliebig steigern. Wenn die Strömungsgeschwindigkeit zu hoch wird, ergeben sich neben unangenehmen Geräuschen auch starke Abnutzungserscheinungen. Die Baugröße der Drehdurchführung lässt sich in der Regel auch nicht beliebig vergrößern. Die Stuhlung des Kalanders und die Lagerung setzen hier Grenzen.

Die ältere US-A-2890026 beschreibt eine temperierbare Walze mit einer Dreheinführung mit Ein- und Auslauf, wobei in der Zeichnung eine große Differenz zwischen den jewiligen Querschnitten erkennbar ist.

Der Erfindung liegt die Aufgabe zugrunde, bei unveränderter Baugröße eine hohe Wärmeübertragung zu ermöglichen.

Diese Aufgabe wird bei einer temperierbaren Walze der eingangs genannten Art dadurch gelöst, dass der zweite Strömungsquerschnitt ($A_{aus}$) um mindestens 15 %, aber maximal 30 % größer ist als der erste Strömungsquerschnitt ($A_{ein}$).

Mit einer derartigen Ausgestaltung der Drehdurchführung verändert man das Verhältnis der Querschnitte von Kernkanal und Ringkanal. Der erste Querschnitt, also der Querschnitt des Kernkanals, wird verkleinert, während in entsprechendem Maße der zweite Querschnitt, also der Querschnitt des Ringkanals, vergrößert wird. Es sollte an dieser Stelle angemerkt werden, dass der Ringkanal dabei nicht unbedingt in Umfangsrichtung durchgehend ausgebildet sein muss. Unterbrechungen, um das den Ringkanal bildende Rohr zu stützen, sind möglich. Wenn man den zweiten Querschnitt größer als den ersten Querschnitt wählt, berücksichtigt man, dass neben der reinen Querschnittsfläche auch weitere Größen auf den Druckabfall Einfluss nehmen, der sich ergibt, wenn das Wärmeträgermedium die Drehdurchführung durchfließt. So hat beispielsweise der Ringkanal eine wesentlich größere Umfangswand als der Kernkanal. Das Wärmeträgermedium wird beim Durchströmen des Ringkanals sowohl radial innen als auch radial außen mit einer Wand in Kontakt kommen und dort abgebremst werden. Beim Kernkanal gibt es nur eine radial äußere Wand. Diese Druckverluste im Ringkanal werden durch die Vergrößerung des zweiten Querschnitts zumindest teilweise kompensiert.

Wenn der zweite Querschnitt um mindestens 8 % größer ist als der erste Strömungsquerschnitt, der Strömungsquerschnitt ist jeweils die Fläche, durch die das Fluid strömen kann, also die durchströmte Fläche, dann ergibt sich eine beträchtliche Steigerung der Querschnittsfläche des zweiten Strömungsquerschnitts und damit eine merkliche Verringerung des Druckabfalls im Ringkanal. Die Strömungsgeschwindigkeit des Wärmeträgermediums im Ringkanal wird herabgesetzt verglichen mit einer Ausbildung, bei der die beiden Strömungsquerschnitte gleich ausgebildet sind. Damit lassen sich Geräusche vermindern. Da nun ein geringerer Druckabfall vorliegt, lassen sich auch höhere Geschwindigkeiten realisieren.

Nach der Erfindung ist der zweite Strömungsquerschnitt um mindestens 15 %, aber maximal 30 % größer als der erste Strömungsquerschnitt. In diesem Bereich ergeben sich optimale Verhältnisse.

Vorzugsweise gilt für das Verhältnis der Strömungsquerschnitte:

$$\frac{A_{ein}^2}{A_{aus}^2} = \frac{d^h{}_{aus}}{d^h{}_{ein}} K$$

wobei

$A_{ein}$ = der erste Strömungsquerschnitt,

$A_{aus}$ = der zweite Strömungsquerschnitt,

$d^h_{ein}$ = der hydraulische Durchmesser des Kernkanals,

$d^h_{aus}$ = der hydraulische Durchmesser des Ringkanals,

K = ein Faktor mit einer Größe im Bereich von 0,85 bis 1,15 ist. Mit einer derartigen Bemessung beachtet man die Auswirkungen des hydraulischen Durchmessers von Ringkanal und Kernkanal. Wenn man das Verhältnis der Quadrate der Strömungsquerschnitte etwa gleich setzt dem Kehrwert des Quotienten der hydraulischen Durchmesser, dann ergeben sich optimale Bedingungen. Abweichungen nach oben und nach unten sind natürlich in gewissem Umfang möglich.

Auch ist von Vorteil, wenn für die Durchmesser von Kernkanal und Ringkanal gilt,

$$(d_a - d_i)^3 \cdot (d_a + d_i)^2 = (d_i - 2w)^5 K$$

wobei

$d_a$ = der äußere Innendurchmesser des Ringkanals,

$d_i$ = der innere Durchmesser des Ringkanals,

w = die Wandstärke eines Rohres zwischen dem Kernkanal und dem Ringkanal und

K = ein Faktor mit einer Größe im Bereich von 0,85 bis 1,15 ist. Damit ergibt sich eine Bemessungsvorschrift, anhand derer man die Durchmesser von Kernkanal und Ringkanal berechnen kann. Der Außendurchmesser des Kernkanals ergibt sich aus dem Innendurchmesser des Ringkanals minus dem Doppelten der Wandstärke des Rohres, das die beiden Kanäle trennt.

Die Erfindung wird im Folgenden anhand eines bevorzugten Ausführungsbeispiels in Verbindung mit der Zeichnung beschrieben. Hierin zeigen:

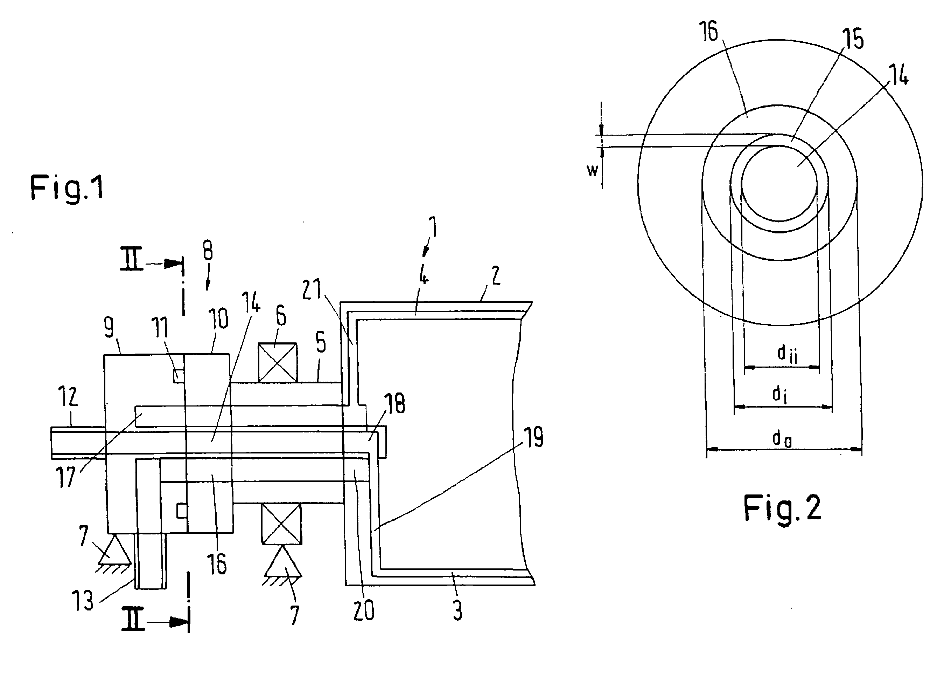

Fig. 1    eine schematische Darstellung eines Teils einer temperierbaren Walze und

Fig. 2    eine Schnittansicht II-II in nicht maßstäblicher Darstellung.

Eine temperierbare Walze 1 weist einen Walzenkörper 2 auf, in dem mehrere Heizkanäle 3, 4 eine Strömungskanalanordnung bilden, durch die ein Wärmeträgermedium geführt werden kann, beispielsweise heißes Wasser oder heißes Öl ein Heizkanal 3, für den "Hinweg" und ein Heizkanal 4 für den "Rückweg" des Wärmeträgermediums. Von jeder Art Heizkanal 3, 4 sind in Umfangsrichtung gleichmäßig verteilt mehrere vorgesehen, wobei sich die Heizkanäle 3, 4 für den Hin- und Rückweg abwechseln.

Der Walzenkörper 2 ist mit einem Walzenzapfen 5 verbunden, der über eine Lageranordnung 6 in einem Gestell 7 gelagert ist, beispielsweise der Stuhlung eines Kalanders.

Der Walzenzapfen 5 ist mit einer Drehdurchführung 8 verbunden, die einen stationären Teil 9 und einen mit dem Walzenzapfen 5 rotierenden Teil 10 aufweist. Schematisch dargestellt ist eine Dichtungsanordnung 11 zwischen den beiden Teilen 9, 10.

Am stationären Teil 9 ist ein Eingangsanschluss 12 vorgesehen, durch den das Wärmeträgermedium zugeführt werden kann. Ferner ist am stationären Teil 9 ein Ausgangsanschluss 13 vorgesehen, durch den das Wärmeträgermedium wieder abgeführt werden kann. Der stationäre Teil 9 ist ebenfalls an dem Gestell 7 gehalten.

Der Eingangsanschluss 9 mündet in einem Kernkanal 14, der nach Art eines Hohlzylinders ausgebildet ist. Der Kernkanal 14 weist einen ersten Strömungsquerschnitt $A_{ein}$ auf. Dieser Strömungsquerschnitt errechnet sich aus

$$A_{ein} = \pi/4 \; d^2_{ii},$$

wobei

$d_{ii}$ = der Durchmesser des Kernkanals 14 ist.

Der Kernkanal 14 ist umgeben von einer Wand 15, die eine Dicke w aufweist. Die Wand 15 ist umgeben von einem Ringkanal 16, der mit dem Ausgangsanschluss 13 in Verbindung steht. Der Ausgangsanschluss 13 mündet hierzu in eine Ringraum 17.

Der Ringkanal 16 hat einen zweiten Strömungsquerschnitt $A_{aus}$, der sich errechnet aus

$$A_{aus} = \pi/4 \cdot (d_a{}^2 - d_i{}^2)$$

wobei

$d_a$ = der äußere Durchmesser des Ringkanals 16 und
$d_i$ = der innere Durchmesser des Ringkanals 16 ist. $d_i$ ist dabei

$$d_i = d_{ii} + 2w.$$

Im Walzenkörper mündet der Kernkanal 14 in einem Raum 18, mit dem die Heizkanäle 3 über erste Stichkanäle 19 verbunden sind. Der Ringkanal 16 mündet im Walzenkörper 2 in einen Ringraum 20, mit dem die Heizkanäle 4 über zweite Stichkanäle 21 verbunden sind.

Man ist bislang davon ausgegangen, dass der erste Strömungsquerschnitt $A_{ein}$, also der Strömungsquerschnitt des Kernkanals 14, gleich dem zweiten Strömungsquerschnitt $A_{aus}$, also dem Strömungsquerschnitt des Ringkanals 16 sein sollte.

Im vorliegenden Ausführungsbeispiel wird nun der zweite Strömungsquerschnitt $A_{aus}$ größer gewählt als der Strömungsquerschnitt $A_{ein}$.

Im Idealfall wird das Verhältnis der Querschnitte nach folgender Formel eingestellt:

$$\frac{A_{ein}^2}{A_{aus}^2} = \frac{d_{aus}^h}{d_{ein}^h}$$

wobei

$d_{aus}^h$ = der hydraulische Durchmesser des Ringkanals und
$d_{ein}^h$ = der hydraulische Durchmesser des Kernkanals ist. Bei üblichen Größen von Drehdurchführungen 8, wie sie in Walzen für Papier- oder Kartonkalander verwendet werden, beträgt dieses Verhältnis etwa 0,4 bis etwa 0,6. Daraus kann man folgende Beziehung ableiten:

$$(d_a - d_i)^3 \cdot (d_a + d_i)^2 = (d_i - 2w)^5 = d_{ii}{}^5.$$

Eine derartige Gleichung lässt sich zwar geschlossen praktisch nicht mehr lösen. Mit iterativen Methoden, beispielsweise Newton, lässt sich diese Gleichung aber relativ problemlos lösen.

Eine herkömmliche Drehdurchführung 8 hatte folgende Werte:

$$d_a = 0,066 \ m$$

$$d_i = 0,051 \ m$$

$$w = 0,0056 \text{ m}$$

$$d_{ii} = 0,0398 \text{ m.}$$

Daraus ergibt sich, dass der zweite Strömungsquerschnitt $A_{ein}$ gleich dem 1,11-fachen des ersten Strömungsquerschnitts $A_{aus}$ ist.

Wenn man nun bei gleich bleibender Wandstärke w der Wand 15 und gleichem Außendurchmesser $d_a$ des Ringkanals 16 die obige Dimensionierung verwendet, dann ergibt sich der Durchmesser des Kernkanals 14 zu $d_{ii}$ = 0,037 m. Entsprechend vergrößert sich der zweite Strömungsquerschnitt $A_{aus}$ und verkleinert sich der erste Strömungsquerschnitt $A_{ein}$.

Die nur geringe Änderung zeigt die Dominanz der Strömungsgeschwindigkeit, die proportional zum Durchmesser in der 4. Potenz ist, gegen den lediglich linearen Einfluss des hydraulischen Durchmessers. Durch die Änderung ist im Ringkanal 16 die Geschwindigkeit des Wärmeträgermediums kleiner, im Kernkanal 14 höher. Die Änderung hat also einen weiteren Vorteil, weil Geräusche eher an der Umlenkung zum Ringkanal 16 entstehen als im Kernkanal 14.

Gute Ergebnisse lassen sich aber bereits dann erreichen, wenn nach der Erfindung der zweite Strömungsquerschnitt $A_{aus}$ um 15 - 30 % größer ist als der erste Strömungsquerschnitt $A_{ein}$.

**Patentansprüche**

1.  Temperierbare Walze (1) mit einem Walzenkörper (4) der eine Strömungskanalanordnung (3,4) für ein Wärmeträgermedium aufweist, die mit einer Drehdurchführung (8) verbunden ist, die einen inneren Kernkanal (14) und einen äußeren Ringkanal (16) aufweist, wobei der Kernkanal (14) einen ersten Strömungsquerschnitt und der Ringkanal (16) einen zweiten Strömungsquerschnitt aufweist, **dadurch gekennzeichnet, dass** der zweite Strömungsquerschnitt ($A_{aus}$) um mindestens 15 %, aber maximal 30 % größer ist als der erste Strömungsquerschnitt ($A_{ein}$).

2.  Walze nach Anspruch 1, **dadurch gekennzeichnet, dass** für das Verhältnis der Strömungsquerschnitte ($A_{ein}$, $A_{aus}$) gilt.

$$\frac{A_{ein}^2}{A_{aus}^2} = \frac{d_{aus}^h}{d_{ein}^h} \cdot K$$

wobei
$A_{ein}$ der erste Strömungsquerschnitt,
$A_{aus}$ der zweite Strömungsquerschnitt,
$d^h_{ein}$ der hydraulische Durchmesser des Kernkanals (14),
$a^h_{aus}$ der hydraulische Durchmesser des Ringkanals (16) und
K ein Faktor mit einer Größe im Bereich von 0,85 bis 1,15 ist.

3.  Walze nach einem der Ansprüche 1 bis 2, **dadurch gekennzeichnet, dass** für die Durchmesser von Kernkanal (14) und Ringkanal (16) gilt:

$$(d_a - d_i)^3 \cdot (d_a + d_i)^2 = (d_i - 2w)^5 \cdot K$$

wobei
$d_a$ der Außendurchmesser des Ringkanals (16),
$d_i$ der Innendurchmesser des Ringkanals (16) und w die Wandstärke der Wand (15) und
K ein Faktor mit einer Größe im Bereich von 0,85 bis 1,15 ist.

**Claims**

1. Temperature-controlled roll (1) having a roll body (4) which has a flow duct arrangement (3, 4) for a heat-exchange medium, which is connected to a rotary lead-through (8) which has an inner core duct (14) and an outer annular duct (16), the core duct (14) having a first flow cross section and the annular duct (16) having a second flow cross section, **characterized in that** the second flow cross section ($A_{out}$) is at least 15% but at most 30% larger than the first flow cross section ($A_{in}$).

2. Roll according to Claim 1, **characterized in that** the following is true of the ratio of the flow cross sections ($A_{in}$, $A_{out}$):

$$\frac{A_{in}^2}{A_{out}^2} = \frac{d_{out}^h}{d_{in}^h} \cdot K$$

where
$A_{in}$ is the first flow cross section,
$A_{out}$ is the second flow cross section,
$d_{in}^h$ is the hydraulic diameter of the core duct (14),
$d_{out}^h$ is the hydraulic diameter of the annular duct (16), and
K is a factor having a magnitude in the range from 0.85 to 1.15.

3. Roll according to either of Claims 1 and 2,
**characterized in that** the following is true of the diameters of core duct (14) and annular duct (16):

$$(d_a - d_i)^3 \cdot (d_a + d_i)^2 = (d_i - 2w)^5 \cdot K$$

where
$d_a$ is the external diameter of the annular duct (16),
$d_i$ is the internal diameter of the annular duct (16) and
w is the wall thickness of the wall (15), and
K is a factor having a magnitude in the range from 0.85 to 1.15.

**Revendications**

1. Rouleau pouvant être tempéré (1), comprenant un corps de rouleau (4) qui présente un agencement de canal d'écoulement (3, 4) pour un fluide caloporteur, qui est connecté à un passage rotatif (8) qui présente un canal central interne (14) et un canal annulaire extérieur (16), le canal central (14) présentant une première section transversale d'écoulement et le canal annulaire (16) présentant une deuxième section transversale d'écoulement, **caractérisé en ce que** la deuxième section transversale d'écoulement ($A_{aus}$) est supérieure d'au moins 15%, mais au maximum de 30%, à la première section transversale d'écoulement ($A_{ein}$).

2. Rouleau selon la revendication 1, **caractérisé en ce que** pour le rapport des sections transversales d'écoulement ($A_{ein}$, $A_{aus}$), on a :

$$\frac{A_{ein}^2}{A_{aus}^2} = \frac{d_{aus}^h}{d_{ein}^h} \cdot K$$

$A_{ein}$ étant la première section transversale d'écoulement,
$A_{aus}$ étant la deuxième section transversale d'écoulement,
$d_{ein}^h$ étant le diamètre hydraulique du canal central (14),

$d^h_{aus}$ étant le diamètre hydraulique du canal annulaire (16), et
K étant un facteur d'une valeur de l'ordre de 0,85 à 1,15.

**3.** Rouleau selon l'une quelconque des revendications 1 à 2, **caractérisé en ce que** pour le diamètre du canal central (14) et du canal annulaire (16), on a :

$$(d_a - d_i)^3 \cdot (d_a + d_i)^2 = (d_i - 2w)^5 \cdot K$$

$d_a$ étant le diamètre extérieur du canal annulaire (16),
$d_i$ étant le diamètre intérieur du canal annulaire (16) et
w étant l'épaisseur de paroi de la paroi (15) et
K étant un facteur d'une valeur de l'ordre de 0,85 à 1,15.

## Fig.1

## Fig.2

EP 1 970 490 B1

**IN DER BESCHREIBUNG AUFGEFÜHRTE DOKUMENTE**

**In der Beschreibung aufgeführte Patentdokumente**

- US 2890026 A